Europäisches Patentamt

(19) European Patent Office

Office européen des brevets

(11) Numéro de publication : **0 183 044**
**B1**

(12) **FASCICULE DE BREVET EUROPÉEN**

(45) Date de publication du fascicule du brevet :
02.11.89

(51) Int. Cl.⁴ : **H 02 H   9/02**

(21) Numéro de dépôt : 85113361.1

(22) Date de dépôt : **22.10.85**

(54) **Dispositif limiteur de la vitesse de variation d'un courant alternatif fourni par un générateur supraconducteur.**

(30) Priorité : 24.10.84 FR 8416318

(43) Date de publication de la demande :
04.06.86 Bulletin 86/23

(45) Mention de la délivrance du brevet :
02.11.89 Bulletin 89/44

(84) Etats contractants désignés :
CH DE FR GB IT LI NL

(56) Documents cités :
DE—A— 2 410 148
US—A— 4 438 474
IEEE TRANSACTIONS ON MAGNETICS, vol. MAG-17,
no. 5, septembre 1981, pages 1950-1963, IEEE, New
York, US; R.I. SCHERMER et al.: "30 MJ superconducting magnetic energy storage for BPA transmission
line stabilizer"

(73) Titulaire : **ALSTHOM**
**38, avenue Kléber**
**F-75784 Paris Cédex 16 (FR)**

(72) Inventeur : **Sabrie, Jean-Louis**
**5, Domaine du Salbert**
**Cravanche F-90300 Valdoie (FR)**

(74) Mandataire : **Weinmiller, Jürgen et al**
**Lennéstrasse 9 Postfach 24**
**D-8133 Feldafing (DE)**

## Description

La présente invention concerne un dispositif limiteur de la vitesse de variation de l'intensité d'un courant alternatif fourni par un générateur supraconducteur à une installation d'utilisation, telle qu'un réseau, comprenant un convertisseur statique alternatif-continu, dont le côté alternatif est relié au circuit alimenté par le générateur supraconducteur, et dont le côté continu est lui-même relié à une bobine supraconductrice.

Dans les installations et réseaux électriques alimentés par des générateurs supraconducteurs, les courants de défaut qui peuvent apparaître sont déterminés par les impédances naturelles des équipements en service au moment de l'apparition du défaut. Ces impédances sont généralement assez faibles et les courants de défaut peuvent atteindre des valeurs très supérieures aux valeurs nominales. Ceci oblige, pour éviter de graves détériorations des circuits, à donner au matériel un dimensionnement très supérieur à celui qui serait nécessaire aux régimes nominaux.

On a déjà proposé dans la publication IEEE Transactions ou Magnetics, vol. MAG.- 17 n° 5, septembre 1981, p. 1950, un dispositif de régulation des fluctuations de tension d'un réseau alternatif électrique à haute tension, comprenant une bobine supraconductrice connectée au réseau par l'intermédiaire d'un circuit alternatif continu piloté par un calculateur. Un tel circuit est cependant en parallèle avec le circuit d'utilisation, et ne permet donc pas la limitation des courants de court-circuit dans celui-ci.

On a déjà proposé dans le document US-A-4 438 474 un dispositif limiteur de la vitesse de variation de l'intensité d'un courant alternatif de réseau à tension élevée, comprenant un convertisseur statique alternatif-continu à pont de diodes, relié par son côté alternatif en série dans le circuit du réseau, et par son côté continu à une ligne comprenant une bobine supraconductrice et un pont de thyristors de liaison avec une alimentation limitant l'intensité circulant dans cette ligne.

La présente invention a pour but de procurer un dispositif susceptible, en cas de variation soudaine du régime électrique, même en cas d'apparition d'un court-circuit, de limiter la vitesse de variation du courant de manière qu'au moment où interviennent les organes de contrôle ou de protection ce courant reste encore assez proche de sa valeur initiale. Elle a encore pour but de limiter le dimensionnement à donner aux organes électriques, tant ceux des circuits que des appareils de contrôle ou de protection, à celui nécessaire pour admettre des courants relativement peu supérieurs aux valeurs nominales.

Le dispositif selon l'invention est caractérisé en ce qu'il comprend en outre un transformateur dont le primaire est en série avec le circuit supraconducteur, et dont le secondaire est relié au côté alternatif du convertisseur statique.

De préférence, le convertisseur statique alternatif-continu est constitué par un pont de diodes, dont la diagonale côté alternatif est reliée au secondaire du transformateur, et dont la diagonale côté continu est reliée à la bobine supraconductrice.

Le convertisseur statique peut aussi être constitué par des thyristors.

On choisit avantageusement une bobine supraconductrice présentant un courant critique suffisamment faible pour limiter le courant de court-circuit du circuit alternatif à une valeur relativement basse.

Il est décrit ci-après, à titre d'exemple et en référence aux figures du dessin annexé, un dispositif limiteur de la vitesse de variation d'un courant alternatif fourni par un générateur supraconducteur.

La figure 1 représente un dispositif limiteur à pont de diodes.

La figure 2 représente le diagramme des variables électriques au cours du fonctionnement du dispositif de la figure 1.

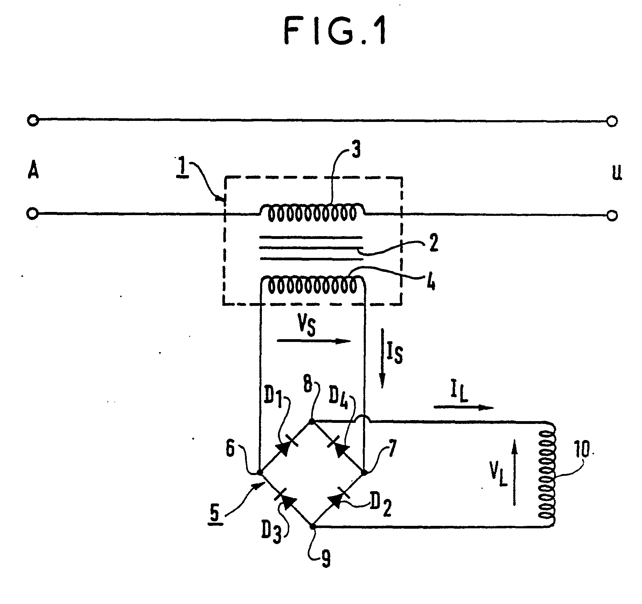

Dans la figure 1, la référence A représente les bornes d'un réseau alternatif supraconducteur d'alimentation et la référence U, les bornes de l'installation d'utilisation.

Le transformateur 1 à circuit magnétique 2, a son primaire 3 en série entre le réseau d'alimentation A et l'installation d'utilisation U. Son secondaire 4 est relié aux bornes 6 et 7 d'un pont redresseur 5 de diodes $D_1$, $D_2$, $D_3$, $D_4$. Les bornes 8, 9 de la seconde diagonale de ce pont sont reliées à la bobine supraconductrice 10.

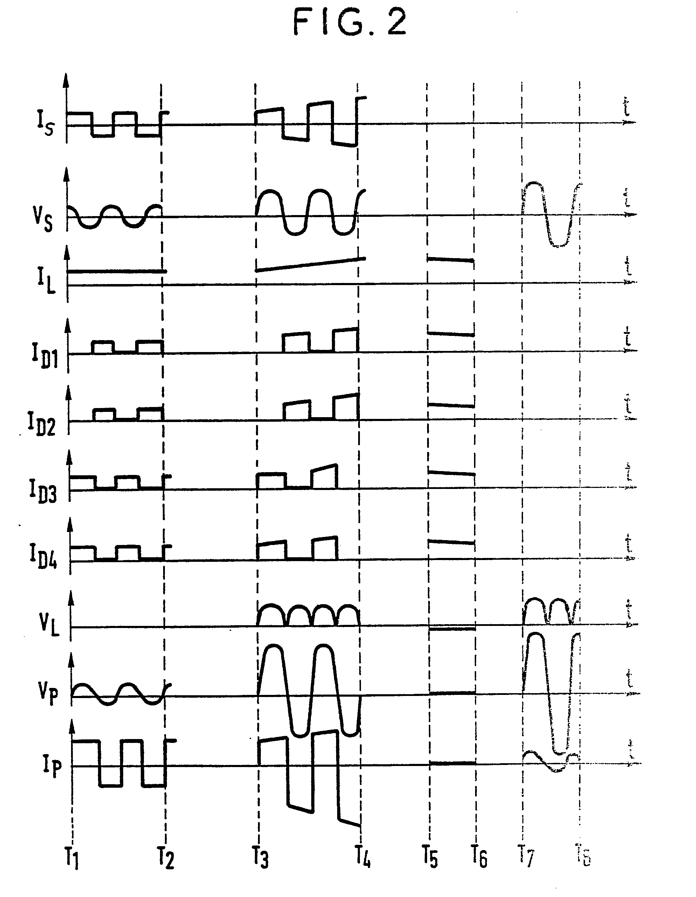

Les diagrammes de la figure 2 représentent le fonctionnement de ce dispositif dans le cas où l'inductance de la bobine supraconductrice, ramenée au primaire du transformateur, est très grande devant les impédances internes du transformateur et des circuits d'alimentation et d'utilisation. Dans ces conditions le courant alternatif présente un très fort taux d'harmoniques.

Dans ces diagrammes, $I_S$ représente l'intensité circulant dans le secondaire du transformateur, $V_S$ la tension aux bornes de son secondaire, $I_L$ l'intensité circulant dans la bobine supraconductrice, $I_{D1}$, $I_{D2}$, $I_{D3}$ et $I_{D4}$, les intensités circulant dans les diodes du pont redresseur, $V_L$ la tension aux bornes de la bobine supraconductrice, $V_p$ et $I_p$ la tension et l'intensité dans le primaire du transformateur, et $T_1$ à $T_8$ les instants successifs en régime nominal, puis en régime de défaut.

Régime nominal (de $T_1$ à $T_2$) : courant et tension du secondaire S sont en quadrature et le courant est en forme de créneaux se répartissant comme indiqué dans les diodes $D_1$, $D_2$, $D_3$, $D_4$. Le courant dans la bobine supraconductrice et la tension à ses bornes présentent des ondulations (dépendantes du dimensionnement) autour d'un courant continu $I_0$ et de la tension nulle.

Régime de défaut (de $T_3$ à $T_4$) : courant et tension du secondaire S sont en phase et la bobine supraconductrice emmagasine de l'énergie. Le courant augmente à une vitesse qui est limitée par l'inductance de la bobine. On a entre courant efficace et courant dans la bobine une relation du genre :

$$I_L = KI_{eff}$$

et par conséquent :

$$\frac{dI_{eff}}{dt} = K' \frac{dI_L}{dt} = K'' \frac{V_{eff}}{L}$$

Le choix de l'inductance de la bobine L permet donc de fixer une valeur maximale à la vitesse d'augmentation du courant efficace.

Régime sans courant alternatif ($T_5$ à $T_6$) : le courant alternatif ayant été coupé, le courant de la bobine supraconductrice continue de se refermer par le pont de diodes. Il diminue avec une vitesse fixée par les pertes du circuit continu et qui peut éventuellement être réglée par la mise en service temporaire d'une résistance.

Régime à circuit continu ouvert ($T_7$ à $T_8$) : si le circuit continu est ouvert par suite d'une transition de la bobine supraconductrice ou d'une avarie quelconque, le courant de court-circuit du circuit alternatif est limité au courant à vide du transformateur ou à une valeur proche. Ceci permet en jouant sur la transition de la bobine supraconductrice de limiter même sans appareil de coupure le courant maximal possible.

On peut ainsi limiter la vitesse d'augmentation de courants alternatifs jusqu'à l'intervention des systèmes de contrôle ou de protection. Il en résulte des avantages nombreux qui se traduisent par une réduction des coûts et une amélioration de la disponibilité des installations électriques :

a) les appareils de coupure peuvent être prévus pour des courants et tensions réduits par rapport aux solutions actuelles,

b) le courant alternatif est limité à une valeur donnée à l'avance en cas de coupure du circuit continu ou de transition de la bobine supraconductrice,

c) le travail sous courant se fait sans risque de court-circuit catastrophique,

d) on peut limiter le courant de défaut dans les installations ainsi équipées à une valeur très inférieure aux valeurs classiques. Il en résulte un gain dimensionnel et économique sur la plupart des équipements.

## Revendications

1. Dispositif limiteur de la vitesse de variation de l'intensité d'un courant alternatif fourni par un générateur supraconducteur (A) à une installation d'utilisation (U), comprenant un convertisseur statique alternatif-continu (5) dont le côté alternatif est relié au circuit alimenté par le générateur supraconducteur, et dont le côté continu est lui-même relié à une bobine supraconductrice (10), caractérisé en ce qu'il comprend en outre un transformateur (1) dont le primaire (3) est en série avec le circuit supraconducteur, et dont le secondaire (4) est relié au côté alternatif du convertisseur statique (5).

2. Dispositif selon la revendication 1, caractérisé en ce que le convertisseur statique alternatif-continu est constitué par un pont de diodes (D1-D4), dont la diagonale alternative est reliée au secondaire du transformateur, et l'autre diagonale à la bobine supraconductrice.

3. Dispositif selon la revendication 1, caractérisé en ce que le convertisseur statique (5) est constitué par des thyristors.

4. Dispositif selon l'une des revendications 1 à 3, caractérisé en ce que la bobine supraconductrice (10) présente un courant critique suffisamment faible pour limiter le courant de court-circuit du circuit alternatif à une valeur relativement basse.

## Claims

1. A device for limiting the rate of variation in the intensity of an alternative current provided by a superconducting generator (A) to a load installation (U) such as a power network, comprising a static AC-DC converter (5), whose AC terminals are connected to the circuit fed by the superconducting generator, and whose DC terminals are connected to a superconducting coil (10), characterized in that it comprises, in addition, a transformer (1) whose primary winding (3) is connected in series with the superconducting circuit, and whose secondary winding (4) is connected to the AC terminals of a static AC-DC converter (5).

2. A device according to claim 1, characterized in that the static AC-DC converter is constituted by a diode bridge (D1 to D4) having its AC diagonal connected to the secondary winding of the transformer and having its other diagonal connected to the superconducting coil.

3. A device according to claim 1, characterized in that the static converter (5) is constituted of thyristors.

4. A device according to one of claims 1 to 3, characterized in that the superconducting winding (10) presents a critical current sufficiently low to limit the short-circuit current in the AC circuit to a relatively low value.

**Patentansprüche**

1. Vorrichtung zur Begrenzung der Stromänderungsgeschwindigkeit eines Wechselstroms, der von einem supraleitenden Generator (A) an eine Verbraucheranlage (U) geliefert wird, mit einem statischen Wechselstrom-Gleichstrom-Umformer (5), der wechselstromseitig mit dem vom supraleitenden Generator gespeisten Stromkreis verbunden ist und der gleichstromseitig selber mit einer supraleitenden Spule (10) verbunden ist, dadurch gekennzeichnet, daß die Vorrichtung weiter einen Transformator (1) aufweist, dessen Primärwicklung (3) in Reihe mit dem supraleitenden Stromkreis und dessen Sekundärwicklung (4) an den Wechselstromeingang des statischen Umformers (5) angeschlossen ist.

2. Vorrichtung nach Anspruch 1, dadurch gekennzeichnet, daß der statische Wechselstrom-Gleichstrom-Umformer aus einer Diodenbrücke (D1-D4) besteht, deren wechselstromseitige Diagonale an die Sekundärwicklung des Transformators und deren andere Diagonale an die supraleitende Spule angeschlossen ist.

3. Vorrichtung nach Anspruch 1, dadurch gekennzeichnet, daß der statische Umformer (5) aus Thyristoren aufgebaut ist.

4. Vorrichtung nach einem der Ansprüche 1 bis 3, dadurch gekennzeichnet, daß die supraleitende Spule (10) einen kritischen Strom besitzt, der genügend niedrig ist, um den Kurzschlußstrom des Wechselstromkreises auf einen relativ niedrigen Wert zu begrenzen.

# FIG.1

# FIG. 2